# EUROPEAN PATENT APPLICATION

(11) **EP 4 539 549 A1**
(43) Date of publication of application: **16.04.2025**
(21) Application number: 23838868.0
(22) Date of filing: 07.07.2023
(51) Int. Cl.: H04W 40/24

(54) **COMMUNICATION METHOD, COMMUNICATION APPARATUS AND COMMUNICATION SYSTEM**

(30) Priority: 13.07.2022 CN 202210824623
(71) Applicant: Huawei Technologies Co., Ltd., Shenzhen, Guangdong 518129 (CN)
(72) Inventor: HAN, Zhilin, Shenzhen, Guangdong 518129 (CN); ZHU, Haoren, Shenzhen, Guangdong 518129 (CN)
(74) Representative: Gill Jennings & Every LLP
(86) International application number: PCT/CN2023/106375
(87) International publication number: WO 2024/012376

(57) **Abstract**

This application provides a communication method, a communication apparatus, and a communication system. The method includes: obtaining topology information of a satellite network, where the topology information includes channel information between satellites in the satellite network; and determining a user plane network element based on the topology information and identification information of a satellite on which an access network device is located. According to the solution, the user plane network element is determined with reference to the topology information and the identification information of the satellite on which the access network device is located, so that an appropriate user plane network element can be determined. This helps implement efficient data transmission and ensure service quality.

## Description

### CROSS-REFERENCE TO RELATED APPLICATIONS

This application claims priority to Chinese Patent Application No. 202210824623.5, filed with the China National Intellectual Property Administration on July 13, 2022 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of communication technologies, and in particular, to a communication method, a communication apparatus, and a communication system.

### BACKGROUND

In a regenerative mode of a satellite, an access network device accessed by a terminal device is deployed on the satellite. Therefore, the satellite is capable of data processing.

In addition, when data is transmitted between the access network device deployed on the satellite and a user plane network element deployed on the ground, the data needs to be routed by one or more other satellites, that is, needs to be routed across satellites. In an uplink direction, uplink data is sent by the terminal device to the access network device deployed on the satellite, and then sent by the access network device; and after being routed by one or more other satellites, the uplink data may arrive at the user plane network element deployed on the ground. In a downlink direction, downlink data is sent by the user plane network element, and after being routed by one or more other satellites, may arrive at the access network device; and then the downlink data is sent by the access network device to the terminal device.

In this scenario, how to implement efficient data transmission to ensure service quality needs to be resolved.

### SUMMARY

Embodiments of this application provide a communication method, a communication apparatus, and a communication system, to implement efficient data transmission and ensure service quality.

According to a first aspect, an embodiment of this application provides a communication method. The method may be performed by a core network control plane network element or a module used in a core network control plane network element. The core network control plane network element may be a session management network element or a mobility management network element, or may be another network element having a function of the core network control plane network element. The method includes: obtaining topology information of a satellite network, where the topology information includes channel information between satellites in the satellite network; and determining a user plane network element based on the topology information and identification information of a satellite on which an access network device is located.

According to the solution, the user plane network element is determined with reference to the topology information and the identification information of the satellite on which the access network device is located, so that an appropriate user plane network element can be determined. This helps implement efficient data transmission and ensure service quality.

In a possible implementation method, path information of a data flow is determined based on the topology information and characteristic information of the data flow, where the path information indicates satellites through which the data flow passes; and the path information is sent to the access network device and the user plane network element.

According to the solution, the path information is sent to the access network device and the user plane network element, where the path information indicates the satellites through which the data flow passes, so that the access network device and the user plane network element may add the path information to a data packet, and a satellite that receives the data packet may route the data packet to a next satellite or a gateway based on the path information, to implement correct routing of the data packet between satellites, to implement efficient data transmission and help ensure service quality.

In a possible implementation method, indication information is sent to the access network device and the user plane network element, where the indication information indicates to add the path information to a data packet of the data flow.

In a possible implementation method, label information of the data flow corresponding to the characteristic information is determined, where the label information is used to select a link between the satellites through which the data flow passes, and the link between the satellites through which the data flow passes is included in a channel between the satellites through which the data flow passes; and the label information is sent to the access network device and the user plane network element.

According to the solution, the label information of the data flow is sent to the access network device and the user plane network element, where the label information of the data flow may be used to indicate a service quality parameter, so that the access network device and the user plane network element may add the label information to a data packet, and a satellite that receives the data packet may select, based on the label information, an optimal or better link from a plurality of links between the satellite and a next-hop satellite or a gateway, to help improve data transmission quality.

In a possible implementation method, indication information is sent to the access network device and the user plane network element, where the indication information indicates to add the label information and the path information to a data packet of the data flow.

In a possible implementation method, the path information includes identification information of the satellites through which the data flow passes.

In a possible implementation method, the path information includes a path identifier, the path identifier indicates a path of the data flow, and the path includes the satellites through which the data flow passes.

According to the solution, when the path information includes the path identifier, the access network device and the user plane network element add the path identifier to the data packet, and do not need to add the identification information of the satellites through which the data flow passes. This can reduce a total length of the data packet, help reduce resource overheads, improve a transmission speed, and ensure service quality.

In a possible implementation method, the path identifier and the identification information of the satellites through which the data flow passes are sent to a bearer network control plane network element or a mobility management network element.

In a possible implementation method, the obtaining topology information of a satellite network includes: receiving the topology information from the bearer network control plane network element or the satellite on which the access network device is located.

In a possible implementation method, the determining a user plane network element based on the topology information and identification information of a satellite on which an access network device is located includes: determining the user plane network element based on the topology information, the identification information of the satellite on which the access network device is located, and location information of at least one gateway.

According to the solution, the user plane network element is determined with reference to the topology information, the identification information of the satellite on which the access network device is located, and the location information of the gateway, so that an appropriate user plane network element can be determined. This helps implement efficient data transmission and ensure service quality.

In a possible implementation method, the determining a user plane network element based on the topology information and identification information of a satellite on which an access network device is located includes: determining the user plane network element based on the topology information, the identification information of the satellite on which the access network device is located, and location information of the satellite on which the access network device is located.

According to the solution, the user plane network element is determined with reference to the topology information, the identification information of the satellite on which the access network device is located, and the location information of the satellite on which the access network device is located, so that an appropriate user plane network element can be determined. This helps implement efficient data transmission and ensure service quality.

In a possible implementation method, the determining a user plane network element based on the topology information and identification information of a satellite on which an access network device is located includes: determining the user plane network element based on the topology information, the identification information of the satellite on which the access network device is located, location information of the access network device, and location information of at least one gateway.

According to the solution, the topology information, the user plane network element is determined with reference to the identification information of the satellite on which the access network device is located, the location information of the access network device, and the location information of the gateway, so that an appropriate user plane network element can be determined. This helps implement efficient data transmission and ensure service quality.

In a possible implementation method, the determining a user plane network element based on the topology information and identification information of a satellite on which an access network device is located includes: determining the user plane network element that can meet a session requirement based on the topology information and the identification information of the satellite on which the access network device is located.

In a possible implementation method, the channel information includes one or more of the following: identification information of the satellites in the satellite network, identification information of a channel between the satellites in the satellite network, a channel delay between the satellites in the satellite network, a channel bandwidth between the satellites in the satellite network, and channel overheads between the satellites in the satellite network.

In a possible implementation method, the topology information further includes satellite information, for example, satellite load.

In a possible implementation method, the topology information further includes a mapping relationship between identification information of a satellite and identification information of an access network device on the satellite. Based on the mapping relationship, it may be learned of a specific satellite with a capability of the access network device or with the access network device.

According to a second aspect, an embodiment of this application provides a communication method. The method may be performed by an access network device, a user plane network element, a module used in an access network device, or a module used in a user plane network element. The method includes: receiving a first data packet; adding path information of a data flow to the first data packet, to obtain a second data packet, where the path information includes a path identifier of the data flow or identification information of satellites through which the data flow passes, the path identifier indicates a path of the data flow, and the path includes the satellites through which the data flow passes; and sending the second data packet.

According to the solution, an access network device or a user plane network element adds the path information to a data packet, where the path information indicates the satellites through which the data flow passes, so that a satellite that receives the data packet may route, based on the path information, the data packet to a next satellite, a gateway, or an external controller that has a connection relationship with a gateway, to implement correct routing of the data packet between satellites, implement efficient data transmission, and help ensure service quality.

**In** a possible implementation method, the path information from a core network control plane network element is received.

**In** a possible implementation method, indication information is received from the core network control plane network element, where the indication information indicates to add the path information to a data packet of the data flow.

In a possible implementation method, label information of the data flow is received from the core network control plane network element, where the label information is used to select a link between the satellites through which the data flow passes, and the link between the satellites through which the data flow passes is included in a channel between the satellites through which the data flow passes; and the label information is added to the first data packet.

In a possible implementation method, indication information is received from the core network control plane network element, where the indication information indicates to add the label information and the path information to a data packet of the data flow.

According to a third aspect, an embodiment of this application provides a communication method. The method may be performed by a bearer network control plane network element or a module used in a bearer network control plane network element. The method includes: sending topology information of a satellite network to a core network control plane network element, where the topology information includes channel information between satellites in the satellite network; receiving, from the core network control plane network element, a path identifier of the data flow and identification information of satellites through which the data flow passes, where the path identifier indicates a path of the data flow, the path includes the satellites through which the data flow passes, and the path identifier and the identification information of the satellites through which the data flow passes are determined based on the topology information; and sending, to the satellites through which the data flow passes, the path identifier of the data flow and the identification information of the satellites through which the data flow passes.

According to the solution, the bearer network control plane network element sends, to the satellites through which the data flow passes, the path identifier of the data flow and the identification information of the satellites through which the data flow passes, so that after receiving the data packet that includes the path identifier of the data flow, the satellites through which the data flow passes can determine a next-hop satellite based on the path identifier of the data flow and the identification information of the satellites through which the data flow passes, to help implement correct data transmission and improve service quality.

In a possible implementation method, the path identifier of the data flow and the identification information of the satellites through which the data flow passes are sent to a gateway.

In a possible implementation method, the channel information includes one or more of the following: identification information of the satellites in the satellite network, identification information of a channel between the satellites in the satellite network, a channel delay between the satellites in the satellite network, a channel bandwidth between the satellites in the satellite network, and channel overheads between the satellites in the satellite network.

According to a fourth aspect, an embodiment of this application provides a communication apparatus. The apparatus may be a core network control plane network element or a module used in a core network control plane network element. The apparatus has a function of implementing any one of the implementation methods according to the first aspect. The function may be implemented by hardware, or may be implemented by hardware executing corresponding software. The hardware or the software includes one or more modules corresponding to the function.

According to a fifth aspect, an embodiment of this application provides a communication apparatus. The apparatus may be an access network device, a user plane network element, a module used in an access network device, or a module used in a user plane network element. The apparatus has a function of implementing any one of the implementation methods according to the second aspect. The function may be implemented by hardware, or may be implemented by hardware executing corresponding software. The hardware or the software includes one or more modules corresponding to the function.

According to a sixth aspect, an embodiment of this application provides a communication apparatus. The apparatus may be a bearer network control plane network element or a module used in a bearer network control plane network element. The apparatus has a function of implementing any one of the implementation methods according to the third aspect. The function may be implemented by hardware, or may be implemented by hardware executing corresponding software. The hardware or the software includes one or more modules corresponding to the function.

According to a seventh aspect, an embodiment of this application provides a communication apparatus, including units or means (means) for performing steps of any one of the implementation methods according to the first aspect to the third aspect.

According to an eighth aspect, an embodiment of this application provides a communication apparatus, including a processor and an interface circuit. The processor is configured to: communicate with another apparatus by using the interface circuit, and perform any one of the implementation methods according to the first aspect to the third aspect. There are one or more processors.

According to a ninth aspect, an embodiment of this application provides a communication apparatus, including a processor coupled to a memory. The processor is configured to invoke a program stored in the memory, to perform any one of the implementation methods according to the first aspect to the third aspect. The memory may be located inside or outside the apparatus. In addition, there may be one or more processors.

According to a tenth aspect, an embodiment of this application provides a communication apparatus, including a processor and a memory. The memory is configured to store computer instructions, and when the apparatus is run, the processor executes the computer instructions stored in the memory, so that the apparatus is enabled to perform any one of the implementation methods according to the first aspect to the third aspect.

According to an eleventh aspect, an embodiment of this application further provides a chip system, including a processor, configured to perform any one of the implementation methods according to the first aspect to the third aspect.

According to a twelfth aspect, an embodiment of this application further provides a computer-readable storage medium. The computer-readable storage medium stores instructions, and when the instructions are run on a communication apparatus, any one of the implementation methods according to the first aspect to the third aspect is performed.

According to a thirteenth aspect, an embodiment of this application further provides a computer program product. The computer program product includes a computer program or instructions. When the computer program or the instructions are run by a communication apparatus, any one of the implementation methods according to the first aspect to the third aspect is performed.

According to a fourteenth aspect, an embodiment of this application provides a communication system, including a core network control plane network element and a bearer network control plane network element configured to perform any one of the methods according to the third aspect. The core network control plane network element is configured to: receive topology information of a satellite network from the bearer network control plane network element, where the topology information includes channel information between satellites in the satellite network; determine, based on the topology information and characteristic information of a data flow, a path identifier of the data flow and identification information of satellites through which the data flow passes, where the path identifier indicates a path of the data flow, and the path includes the satellites through which the data flow passes; and send, to the bearer network control plane network element, the path identifier of the data flow and the identification information of the satellites through which the data flow passes.

### BRIEF DESCRIPTION OF DRAWINGS

FIG. 1(a) is a diagram of a 5G network architecture based on a service-based architecture;
FIG. 1(b) is a diagram of a 5G network architecture based on a point-to-point interface;
FIG. 2 is a diagram of a structure of a satellite topology;
FIG. 3 is a schematic flowchart of a communication method according to an embodiment of this application;
FIG. 4(a) is a schematic flowchart of a communication method according to an embodiment of this application;
FIG. 4(b) is a schematic flowchart of a communication method according to an embodiment of this application;
FIG. 5 is a schematic flowchart of a communication method according to an embodiment of this application;
FIG. 6 is a schematic flowchart of a communication method according to an embodiment of this application;
FIG. 7 is a schematic flowchart of a communication method according to an embodiment of this application;
FIG. 8 is a schematic flowchart of a communication method according to an embodiment of this application;
FIG. 9 is a schematic flowchart of a communication method according to an embodiment of this application;
FIG. 10 is a schematic flowchart of a communication method according to an embodiment of this application;
FIG. 11 is a diagram of a communication apparatus according to an embodiment of this application; and
FIG. 12 is a diagram of a communication apparatus according to an embodiment of this application.

### DESCRIPTION OF EMBODIMENTS

To cope with a challenge from a wireless broadband technology and maintain a leading advantage of a network in a 3rd generation partnership project (3rd Generation Partnership Project, 3GPP), the 3GPP standard group formulated a next generation mobile communication network system (Next Generation System) architecture, which is referred to as a 5th generation (5th Generation, 5G) network architecture. The architecture not only supports access to a 5G core network (core network, CN) by using a radio access technology (for example, a long-term evolution (long-term evolution, LTE) access technology, a 5G radio access network (radio access network, RAN) access technology, or the like) defined by the 3GPP standard group, but also supports access to a core network by using a non-3GPP (non-3GPP) access technology and by using a non-3GPP interworking function (non-3GPP interworking function, N3IWF) or a next generation access gateway (next generation packet data gateway, ngPDG).

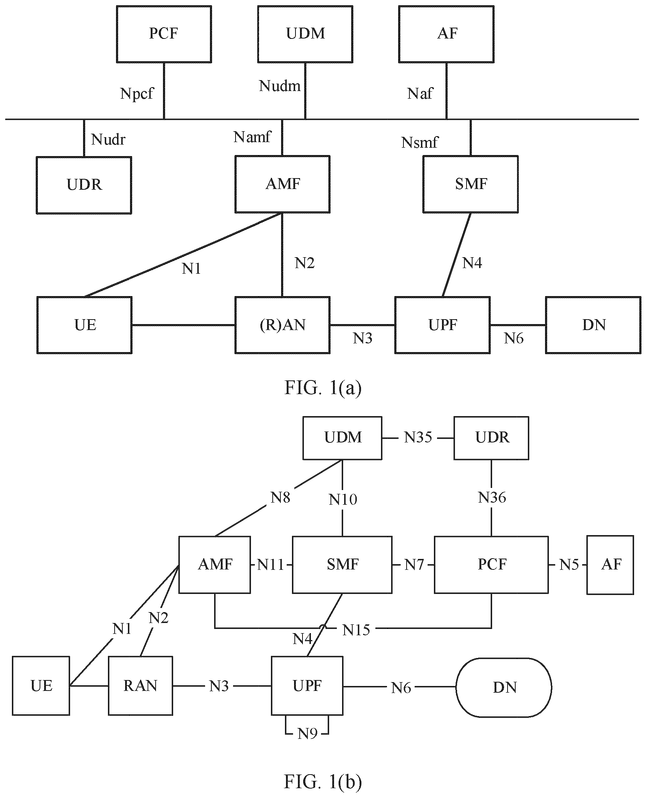

FIG. 1(a) is a diagram of a 5G network architecture based on a service-based architecture. The 5G network architecture shown in FIG. 1(a) may include an access network device and a core network device. A terminal device accesses a data network (data network, DN) by using the access network device and the core network device. The core network device includes but is not limited to some or all of the following network elements: an authentication server function (authentication server function, AUSF) network element (not shown in the figure), a unified data management (unified data management, UDM) network element, a unified data repository (unified data repository, UDR) network element, a network repository function (network repository function, NRF) network element (not shown in the figure), a network exposure function (network exposure function, NEF) network element (not shown in the figure), an application function (application function, AF) network element, a policy control function (policy control function, PCF) network element, an access and mobility management function (access and mobility management function, AMF) network element, a session management function (session management function, SMF) network element, a user plane function (user plane function, UPF) network element, and a binding support function (binding support function, BSF) network element (not shown in the figure).

The terminal device may be user equipment (user equipment, UE), a mobile station, a mobile terminal device, or the like. The terminal device may be widely used in various scenarios, for example, device-to-device (device-to-device, D2D) communication, vehicle-to-everything (vehicle-to-everything, V2X) communication, machine-type communication (machine-type communication, MTC), internet of things (internet of things, IOT), virtual reality, augmented reality, industrial control, self-driving, telemedicine, a smart grid, smart furniture, smart office, smart wearables, smart transportation, and a smart city. The terminal device may be a mobile phone, a tablet computer, a computer with a wireless transceiver function, a wearable device, a vehicle, an urban air transportation vehicle (for example, an uncrewed aerial vehicle, a helicopter, or the like), a ship, a robot, a robotic arm, a smart home device, or the like.

The access network device may be a radio access network (RAN) device or a wireline access network (wireline access network, FAN) device. The radio access network device includes a 3GPP access network device, an untrusted non-3GPP access network device, and a trusted non-3GPP access network device. The 3GPP access network device includes but is not limited to: an evolved NodeB (evolved NodeB, eNodeB) in LTE, a next generation NodeB (next generation NodeB, gNB) in a 5G mobile communication system, a base station or a module or unit that completes some functions of a base station in a future mobile communication system, for example, a central unit (central unit, CU), a distributed unit (distributed unit, DU), or the like. The untrusted non-3GPP access network device includes but is not limited to: an untrusted non-3GPP access gateway or an N3IWF device, an untrusted wireless local area network (wireless local area network, WLAN) access point (access point, AP), a switch, and a router. The trusted non-3GPP access network device includes but is not limited to: a trusted non-3GPP access gateway, a trusted WLAN AP, a switch, and a router. The wireline access network device includes but is not limited to: a wireline access gateway (wireline access gateway), a fixed-line phone network device, a switch, and a router.

The access network device and the terminal device may be fixed or mobile. The access network device and the terminal device may be deployed on the land, including an indoor device, an outdoor device, a hand-held device, or an in-vehicle device; may be deployed on the water; or may be deployed on an airplane, a balloon, and an artificial satellite in the air. Application scenarios of the access network device and the terminal device are not limited in embodiments of this application.

The AMF network element includes functions such as mobility management, and access authentication/authorization. In addition, the AMF is responsible for transferring a user policy between a terminal device and a PCF.

The SMF network element includes functions such as session management, execution of a control policy delivered by a PCF, UPF selection, and allocation of an internet protocol (internet protocol, IP) address of a terminal device.

The UPF network element includes functions such as user plane data forwarding, session/flow-level-based charging statistics collection, and bandwidth limitation.

The UDM network element includes functions such as subscription data management, and user access authorization.

The UDR network element includes functions such as storage and retrieval of subscription data, policy data, application data, and another type of data.

The NEF network element is configured to support exposure of capabilities and events.

The AF network element transfers a requirement of an application side for a network side, for example, a quality of service (quality of service, QoS) requirement, user status event subscription, or the like. The AF may be a third-party functional entity, or may be an operator-deployed application service, for example, an IP multimedia subsystem (IP Multimedia Subsystem, IMS) voice call service. The AF network element includes an AF network element (that is, an AF network element of an operator) in a core network and a third-party AF network element (for example, an application server of an enterprise).

The PCF includes policy control functions such as session-level or service flow-level charging, QoS bandwidth guarantee, mobility management, and terminal device policy decision-making. The PCF network element includes an access and mobility management policy control function (access and mobility management policy control function, AM PCF) network element and a session management policy control function (session management PCF, SM PCF) network element. The AM PCF network element is configured to formulate an AM policy for a terminal device, and the AM PCF network element may alternatively be referred to as a policy control function network element that provides a service for a terminal device (PCF for UE). The SM PCF network element is configured to formulate a session management policy (session management policy, SM policy) for a session. The SM PCF network element may alternatively be referred to as a policy control function network element that serves a session (PCF for a PDU session).

The NRF network element may be configured to provide a network element discovery function, and provide, based on a request of another network element, network element information corresponding to a network element type. The NRF further provides a network element management service, including network element registration, update, and deregistration, network element status subscription and push, and the like.

The BSF network element provides functions such as registration/deregistration/update of a BSF service, NRF connection detection, session binding information creation, UE information obtaining, and session binding information query for duplicate IP addresses.

The AUSF network element is responsible for performing authentication on a user, to determine whether the user or a device is allowed to access the network.

The DN is a network located outside an operator network. The operator network may access a plurality of DNs, and a plurality of services may be deployed on the DN, to provide services such as data and/or voice for a terminal device. For example, the DN is a private network of a smart factory, a sensor installed in a workshop of the smart factory may be a terminal device, a control server of the sensor is deployed in the DN, and the control server may serve the sensor. The sensor may communicate with the control server, to obtain instructions of the control server, transmit collected sensor data to the control server based on the instructions, and the like. For another example, the DN is an internal office network of a company, a mobile phone or a computer of an employee of the company may be a terminal device, and the mobile phone or the computer of the employee may access information, data resources, and the like in the internal office network of the company.

In FIG. 1(a), the Npcf, the Nurf, the Nudm, the Naf, the Namf, and the Nsmf are service-based interfaces provided by the PCF, the UDR, the UDM, the AF, the AMF, and the SMF, respectively, and are used for invoking corresponding service-based operations. N1, N2, N3, N4, and N6 are interface sequence numbers. Meanings of the interface sequence numbers are as follows.
(1) N1 is an interface between the AMF and the terminal device, and may be configured to transfer non-access stratum (non-access stratum, NAS) signaling (for example, including a QoS rule from the AMF) and the like to the terminal device.
(2) N2 is an interface between the AMF and the access network device, and may be configured to transfer radio bearer control information from a core network side to the access network device, and the like.
(3) N3 is an interface between the access network device and the UPF, and may mainly be configured to transfer uplink and downlink user plane data between the access network device and the UPF.
(4) N4 is an interface between the SMF and the UPF, and may be configured to transfer information between a control plane and a user plane, including delivery of a forwarding rule, a QoS rule, a data statistics rule, and the like from the control plane to the user plane, and reporting of user plane information.
(5) N6 is an interface between the UPF and the DN, and is configured to transfer uplink and downlink user data flows between the UPF and the DN.

FIG. 1(b) is a diagram of a 5G network architecture based on a point-to-point interface. For descriptions of functions of network elements in the 5G network architecture, refer to descriptions of functions of corresponding network elements in FIG. 1(b). Details are not described again. A main difference between FIG. 1(b) and FIG. 1(a) lies in that interfaces between control plane network elements in FIG. 1(a) are service-based interfaces, and interfaces between control plane network elements in FIG. 1(b) are point-to-point interfaces.

In the architecture shown in FIG. 1(b), names and functions of the interfaces between the network elements are as follows.
(1) For meanings of N1, N2, N3, N4, and N6 interfaces, refer to the foregoing descriptions.
(2) N5 is an interface between the AF network element and the PCF network element, and may be configured to deliver an application service request and report a network event.
(3) N7 is an interface between the PCF network element and the SMF network element, and may be configured to deliver a protocol data unit (protocol data unit, PDU) session granularity control policy and a service data flow granularity control policy.
(4) N8 is an interface between the AMF network element and the UDM network element, and may be used by the AMF network element to obtain subscription data and authentication data related to access and mobility management from the UDM network element, and used by the AMF network element to register information related to terminal device mobility management with the UDM network element, and the like.
(5) N9 is a user plane interface between the UPF network element and the UPF network element, and is configured to transfer uplink and downlink user data flows between UPF network elements.
(6) N10 is an interface between the SMF network element and the UDM network element, and may be used by the SMF network element to obtain subscription data related to session management from the UDM network element, and used by the SMF network element to register information related to a terminal device session with the UDM network element, and the like.
(7) N11 is an interface between the SMF network element and the AMF network element, and may be configured to transfer PDU session tunnel information between the access network device and the UPF, transfer a control message sent to the terminal device, transfer radio resource control information sent to the access network device, and the like.
(8) N15 is an interface between the PCF network element and the AMF network element, and may be configured to deliver a terminal device policy and an access control-related policy.
(9) N35 is an interface between the UDM network element and the UDR network element, and may be used by the UDM network element to obtain user subscription data information from the UDR network element.
(10) N36 is an interface between the PCF network element and the UDR network element, and may be used by the PCF network element to obtain policy-related subscription data and application data-related information from the UDR network element.

It may be understood that, the foregoing network elements or functions may be network elements in a hardware device, may be software functions running on dedicated hardware, or may be virtualized functions instantiated on a platform (for example, a cloud platform). Optionally, the foregoing network element or function may be implemented by one device, may be jointly implemented by a plurality of devices, or may be implemented by one functional module in one device. This is not specifically limited in embodiments of this application.

The user plane network element, the session management network element, and the mobility management network element in this application may be respectively a UPF network element, an SMF network element, and an AMF network element in a 5G system, or may be network elements that have functions of the UPF network element, the SMF network element, and the AMF network element in a future communication network such as a 6G network. This is not limited in this application. In this embodiment of this application, an example in which the UPF network element, the SMF network element, and the AMF network element are respectively a user plane network element, a session management network element, and a mobility management network element is used for descriptions. In addition, the UPF network element, the SMF network element, and the AMF network element are respectively referred to as a UPF, an SMF, and an AMF for short.

For ease of descriptions, in this embodiment of this application, a base station (for example, an eNB in 4G, a gNB in 5G, or a base station in future communication) is used as an example of an access network device for descriptions, and a "base station" that appears subsequently may be replaced with an "access network device". In this embodiment of this application, UE is used as an example of a terminal device for descriptions, and "UE" that appears subsequently may be replaced with a "terminal device".

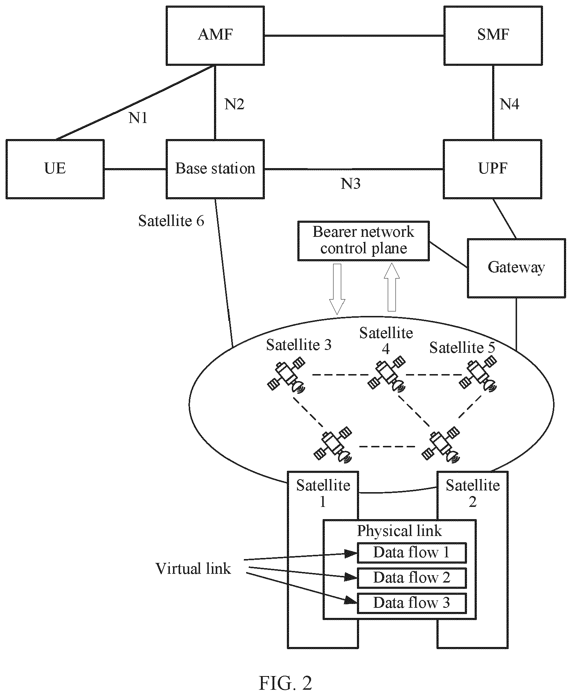

FIG. 2 is a diagram of a structure of a satellite topology. In a regenerative mode, a base station accessed by UE is deployed on a satellite. In an uplink direction, the UE sends uplink data to the base station deployed on the satellite, and the base station sends the uplink data; and after being routed by one or more satellites, the uplink data is sent to a gateway deployed on the ground, and then sent by the gateway to a UPF deployed on the ground. In a downlink direction, a UPF deployed on the ground sends downlink data to a gateway deployed on the ground, and the gateway sends the downlink data; and after being routed by one or more satellites, the downlink data arrives at the base station deployed on the satellite, and then sent by the base station to the UE.

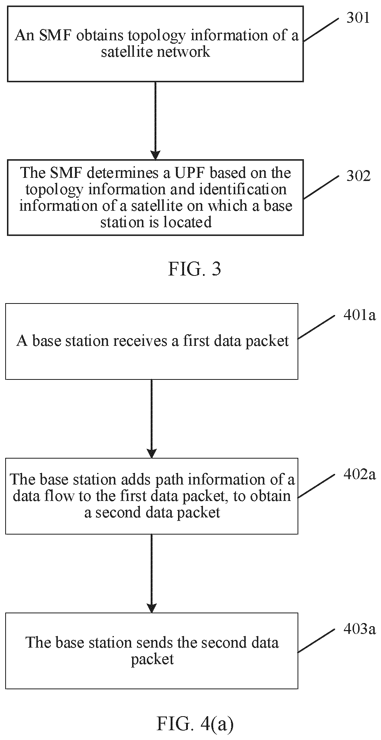

FIG. 3 is a schematic flowchart of a communication method according to an embodiment of this application. The method is performed by a core network control plane network element. The core network control plane network element may be a session management network element (for example, an SMF or an AMF) or another network element having a function of the core network control plane network element. The following uses an example in which the SMF performs the method for descriptions. The method includes the following steps.

Step 301: An SMF obtains topology information of a satellite network.

In an implementation method, the SMF receives topology information from a bearer network control plane network element (for example, a software-defined networking (Software-Defined Networking, SDN) controller). In other words, the bearer network control plane network element collects the topology information of the satellite network, and then sends the topology information to the SMF.

In another implementation method, the SMF receives topology information of a satellite on which a base station is located from the SMF. In other words, the satellite on which the base station is located collects the topology information of the satellite network, and then sends the topology information to the SMF.

The topology information includes channel information between satellites in the satellite network, and the satellite network may include satellites in one or more satellite constellations.

The channel information between the satellites in the satellite network includes one or more of the following information.
(1) Identification information of the satellites in the satellite network.
(2) Identification information of a channel between the satellites in the satellite network, where the identification information of the channel is used to identify two satellites that can communicate with each other.
(3) A channel delay between the satellites in the satellite network, where the channel delay is a delay between two satellites that can communicate with each other.
(4) A channel bandwidth between the satellites in the satellite network, where the channel bandwidth is a bandwidth between two satellites that can communicate with each other.
(5) Channel overheads between the satellites in the satellite network, where the channel overheads are overheads between two satellites that can communicate with each other.

The example shown in FIG. 2 is used as an example. The satellite network includes a total of six satellites: satellites 1 to 6. The base station accessed by the UE is deployed on the satellite 6. Therefore, the channel information between the satellites in the satellite network includes one or more of the following information.
(1) Identification information of the satellites 1 to 6.
(2) Identification information of channels 1 to 7.

The channel 1 is a channel between the satellite 1 and the satellite 2, the channel 2 is a channel between the satellite 1 and the satellite 3, the channel 3 is a channel between the satellite 2 and the satellite 4, the channel 4 is a channel between the satellite 2 and the satellite 5, the channel 5 is a channel between the satellite 3 and the satellite 4, the channel 6 is a channel between the satellite 3 and the satellite 6, and the channel 7 is a channel between the satellite 4 and the satellite 5.
(3) Channel delays of the channels 1 to 7.
(4) Channel bandwidths of the channels 1 to 7.
(5) Channel overheads of the channels 1 to 7.

In a possible implementation method, the topology information further includes satellite information, for example, satellite load.

In a possible implementation method, the topology information further includes a mapping relationship between identification information of a satellite and identification information of a base station on the satellite. Based on the mapping relationship, it may be learned of a specific satellite with a capability of the base station or with the base station.

Step 302: The SMF determines a UPF based on the topology information and identification information of a satellite on which the base station is located.

In an implementation method, if the topology information includes a mapping relationship between identification information of a satellite and identification information of a base station on the satellite, the SMF may determine, based on the mapping relationship and the identification information of the base station accessed by the UE, the identification information of the satellite on which the base station is located. If the topology information does not include the mapping relationship, the SMF may obtain, from a third party, the identification information of the satellite on which the base station is located, or the identification information of the satellite on which the base station is located is pre-configured on the SMF.

In an implementation method, the SMF determines the UPF that can meet a session requirement based on the topology information and the identification information of the satellite on which the base station is located. In other words, the UPF that can meet a current session requirement is selected from a plurality of UPFs, so that service quality can be ensured. For example, the UPF selected by the SMF can establish a connection to the base station by using a satellite in the topology information, and the session can meet the current session requirement.

In another implementation method, the SMF determines the UPF based on the topology information, the identification information of the satellite on which the base station is located, and location information of the base station. The location information of the base station may be determined based on ephemeris information of the satellite on which the base station is located. For example, the SMF first determines, based on the topology information and the identification information of the satellite on which the base station is located, the plurality of UPFs that can meet a current session requirement, and then selects the UPF based on the location information of the plurality of UPFs and the location information of the base station. For example, a UPF closest to the base station is selected from the plurality of UPFs. According to the method, a phenomenon that a transmission distance is excessively long in a terrestrial network can be avoided, to ensure service quality.

According to either of the foregoing two methods, the SMF may determine the UPF. After determining the UPF, the SMF may then select a gateway. For example, the SMF may select a gateway closest to the UPF based on location information of a plurality of gateways. Alternatively, after determining the UPF, the SMF sends identification information of the UPF to an external controller, so that the external controller selects a gateway closest to the UPF based on location information of a plurality of gateways. According to the method, a phenomenon that a transmission distance is excessively long in a terrestrial network can be avoided, to ensure service quality.

**In** still another implementation method, the SMF determines the UPF based on the topology information, the identification information of the satellite on which the base station is located, and location information of a plurality of gateways. For example, the SMF first determines, based on the topology information and the identification information of the satellite on which the base station is located, the plurality of UPFs that can meet a current session requirement, and then selects the UPF based on the location information of the plurality of UPFs and the location information of the plurality of gateways. For example, there is one target UPF in the plurality of UPFs, and there is one target gateway in the plurality of gateways. A distance between the target UPF and the target gateway is a minimum value of a distance between any UPF in the plurality of UPFs and any gateway in the plurality of gateways. According to the method, a phenomenon that a transmission distance is excessively long in a terrestrial network can be avoided, to ensure service quality. According to the method, both the UPF and the gateway can be selected.

In still another implementation method, the SMF determines the UPF based on the topology information, the identification information of the satellite on which the base station is located, location information of the base station, and location information of a plurality of gateways. The location information of the base station may be determined based on ephemeris information of the satellite on which the base station is located. For example, the SMF first determines, based on the topology information and the identification information of the satellite on which the base station is located, the plurality of UPFs that can meet a current session requirement, and then selects the UPF based on the location information of the plurality of UPFs, the location information of the plurality of gateways, and the location information of the base station. For example, the SMF selects a target UPF from the plurality of UPFs, and selects a target gateway from the plurality of gateways, so that a sum of a distance from the target UPF to the target gateway and a distance from the target gateway to the base station is the smallest, that is, a total distance between the target UPF, the target gateway, and the base station is less than a total distance between another UPF, another gateway, and the base station. According to the method, a phenomenon that a transmission distance is excessively long in a terrestrial network can be avoided, to ensure service quality. According to the method, both the UPF and the gateway can be selected.

In still another implementation method, the SMF or an external controller may select, based on location information of the base station and location information of a plurality of gateways, a gateway closest to the base station, which is referred to as a target gateway. Then, the SMF determines the UPF based on the topology information, the identification information of the satellite on which the base station is located, and the location information of the target gateway. For example, the SMF first determines, based on the topology information and the identification information of the satellite on which the base station is located, the plurality of UPFs that can meet a current session requirement, and then selects the UPF closest to the target gateway from the plurality of UPFs. According to the method, a phenomenon that a transmission distance is excessively long in a terrestrial network can be avoided, to ensure service quality.

According to the solution, the user plane network element is determined with reference to the topology information and the identification information of the satellite on which the base station is located, so that an appropriate UPF can be determined. This helps implement efficient data transmission and ensure service quality.

In an implementation method, after step 302, the SMF determines path information of a data flow based on the topology information of the satellite network and characteristic information of the data flow. The path information indicates satellites through which the data flow passes. The data flow may be, for example, a QoS flow, a service flow, or another type of data flow. The characteristic information of the data flow includes a resource type of the data flow and/or a priority of the data flow. The resource type includes, for example, a video stream, an audio stream, and the like, and the priority may be represented by a 5G QoS identifier (5G QoS identifier, 5QI). The example shown in FIG. 2 is used as an example. For example, for a data flow 1, path information of the data flow 1 is determined based on the topology information of the satellite network and characteristic information of the data flow 1. The path information of the data flow 1 indicates that satellites through which the data flow 1 passes include the satellite 6, the satellite 3, the satellite 4, and the satellite 5. For another example, for a data flow 2, path information of the data flow 2 is determined based on the topology information of the satellite network and characteristic information of the data flow 2. The path information of the data flow 2 indicates that satellites through which the data flow 2 passes include the satellite 6, the satellite 1, the satellite 2, and the satellite 5.

After determining the path information of the data flow, the SMF may send the path information to the base station and the UPF, and may further send indication information to the base station and the UPF. The indication information indicates to add the path information to a data packet of the data flow. In an uplink direction, after receiving an uplink data packet, the base station adds the path information to the uplink data packet, and then the base station sends the uplink data packet to a satellite indicated by the path information. After being routed by the satellite indicated by the path information, the uplink data packet is transmitted to the gateway, and then the gateway sends the uplink data packet to the UPF. In a downlink direction, after receiving a downlink data packet, the UPF adds the path information to the downlink data packet, then the UPF sends the downlink data packet to the gateway, and the gateway sends the downlink data packet. After being routed by a satellite indicated by the path information, the downlink data packet is transmitted to the base station.

In an implementation method, after determining the path information of the data flow, the SMF further determines label information of the data flow corresponding to the characteristic information of the data flow. The label information is used to select a link between the satellites through which the data flow passes, and the link between the satellites through which the data flow passes is included in a channel between the satellites through which the data flow passes. That is, the label information is used to select a link between two adjacent routing nodes (that is, between satellites, or between a satellite and a gateway). The label information is a QoS parameter that can be identified by a bearer network. Therefore, the satellite, the base station on the satellite, and the gateway can all identify the label information. The satellite 1 and the satellite 2 in FIG. 2 are used as an example. There are a plurality of virtual links between the satellite 1 and the satellite 2. In this case, the satellite 1 or the satellite 2 may select one of the plurality of virtual links between the satellite 1 and the satellite 2 based on the label information in data of the received data flow, and then use the selected virtual link to transmit the data of the data flow, so that a link between adjacent routing nodes is dynamically selected based on the label information, to help improve communication quality. A method for selecting, by the satellite 1 based on the label information in the data of the received data flow, one of the plurality of virtual links between the satellite 1 and the satellite 2 may be, for example, selecting, from the plurality of virtual links, a virtual link that best meets a QoS requirement (for example, one or more of a quality requirement, a delay requirement, and the like) indicated by the label information. This is described herein, and details are not described below. After the SMF determines the path information of the data flow and the label information of the data flow, the SMF may send the path information of the data flow and the label information of the data flow to the base station and the UPF, and may further send indication information to the base station and the UPF, where the indication information indicates to add the path information and the label information to a data packet of the data flow. In an uplink direction, after receiving an uplink data packet, the base station adds the path information and the label information to the uplink data packet, and then the base station sends the uplink data packet to a satellite indicated by the path information. After being routed by the satellite indicated by the path information, the uplink data packet is transmitted to the gateway, and then the gateway sends the uplink data packet to the UPF. In a downlink direction, after receiving a downlink data packet, the UPF adds the path information and the label information to the downlink data packet, then the UPF sends the downlink data packet to the gateway, and the gateway sends the downlink data packet. After being routed by a satellite indicated by the path information, the downlink data packet is transmitted to the base station.

In an implementation method, the path information that is of the data flow and that is added by the base station or the UPF to the data packet includes identification information of the satellites through which the data flow passes.

In still another implementation method, the path information that is of the data flow and that is added by the base station or the UPF to the data packet includes a path identifier, the path identifier indicates a path of the data flow, and the path includes the satellites through which the data flow passes. In other words, there is a correspondence between the path identifier and the identification information of the satellites through which the data flow passes.

In addition, the SMF may further send, to the bearer network control plane network element, the AMF, or the base station, the path identifier and the identification information of the satellites through which the data flow passes. Then, the bearer network control plane network element, the AMF, or the base station sends, to the satellites through which the data flow passes and the gateway, the path identifier and the identification information of the satellites through which the data flow passes. After the satellite and the gateway receive a data packet that includes the path identifier, a next-hop satellite may be determined based on the path identifier in the data packet and a correspondence between a locally stored path identifier and the identification information of the satellites through which the data flow passes, and the data packet may be sent to the next-hop satellite.

FIG. 4(a) is a schematic flowchart of a communication method according to an embodiment of this application. The method is performed by a base station deployed on a satellite. The method is performed after embodiment in FIG. 3. In other words, embodiment in FIG. 3 is first performed, and embodiment in FIG. 4(a) is then performed.

The method includes the following steps.

Step 401a: A base station receives a first data packet.

The first data packet is an uplink data packet, and the first data packet is from UE.

Step 402a: The base station adds path information of a data flow to the first data packet, to obtain a second data packet.

In an implementation method, the path information added by the base station to the first data packet includes a path identifier of the data flow, to obtain the second data packet. Optionally, in addition to the path identifier of the data flow, the base station further adds label information of the data flow to the first data packet.

In another implementation method, the path information added by the base station to the first data packet includes identification information of satellites through which the data flow passes, to obtain the second data packet. Optionally, in addition to the identification information of the satellites through which the data flow passes, the base station further adds label information of the data flow to the first data packet.

Step 403a: The base station sends the second data packet.

In an implementation method, if the path information added by the base station to the first data packet includes the path identifier of the data flow, to obtain the second data packet, the base station determines a next-hop satellite based on a correspondence between the path identifier and the identification information of the satellites through which the data flow passes. The example in FIG. 2 is used as an example. It is assumed that the satellites through which the data flow passes include the satellite 6, the satellite 3, the satellite 4, and the satellite 5. The base station sends the second data packet to the satellite 3, and then the satellite 3 obtains the path identifier of the data flow in the second data packet, and then determines a next-hop satellite, that is, the satellite 4, based on a correspondence between a path identifier stored on the satellite 3 and the identification information of the satellites through which the data flow passes. Then, the satellite 3 sends the second data packet to the satellite 4. Similarly, the satellite 4 sends the second data packet to the satellite 5. In addition, the satellite 5 determines that the satellite 5 is a last-hop satellite in the satellites through which the data flow passes, the satellite 5 sends the second data packet to a gateway on the ground, and then the gateway sends the second data packet to the UPF. Optionally, if the base station adds, in addition to the path identifier of the data flow, the label information of the data flow to the first data packet, both the base station and the satellites through which the data flow passes may select a link to a next-hop satellite or a gateway based on the label information in the second data packet. For example, there are a plurality of virtual links between the satellite 3 and the satellite 4, and the satellite 3 may select an optimal or better virtual link from the plurality of virtual links based on the label information.

In another implementation method, if the path information added by the base station to the first data packet includes the identification information of the satellites through which the data flow passes, to obtain the second data packet, the base station determines a next-hop satellite based on the identification information of the satellites through which the data flow passes. The example in FIG. 2 is used as an example. It is assumed that the satellites through which the data flow passes include the satellite 6, the satellite 3, the satellite 4, and the satellite 5. The base station sends the second data packet to the satellite 3, and then the satellite 3 obtains the identification information of the satellites through which the data flow in the second data packet passes, and then determines a next-hop satellite, that is, the satellite 4, based on the identification information of the satellites through which the data flow passes. Then, the satellite 3 sends the second data packet to the satellite 4. Similarly, the satellite 4 sends the second data packet to the satellite 5. In addition, the satellite 5 determines that the satellite 5 is a last-hop satellite in the satellites through which the data flow passes, the satellite 5 sends the second data packet to a gateway on the ground, and then the gateway sends the second data packet to the UPF. Optionally, if the base station adds, in addition to the identification information of the satellites through which the data flow passes, the label information of the data flow to the first data packet, both the base station and the satellites through which the data flow passes may select a link to a next-hop satellite or a gateway based on the label information in the second data packet. For example, there are a plurality of virtual links between the satellite 3 and the satellite 4, and the satellite 3 may select an optimal or better virtual link from the plurality of virtual links based on the label information.

According to the solution, the base station adds the path information to the data packet, where the path information indicates the satellites through which the data flow passes, so that a satellite that receives the data packet may route the data packet to a next satellite or a gateway based on the path information, to implement correct routing of the data packet between satellites, implement efficient data transmission, and help ensure service quality.

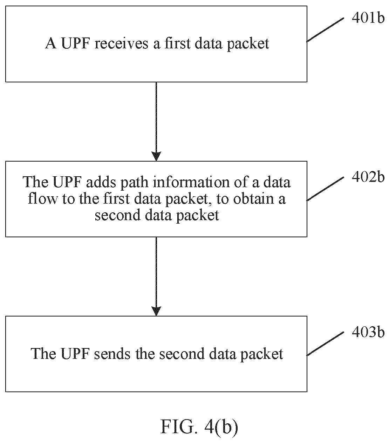

FIG. 4(b) is a schematic flowchart of a communication method according to an embodiment of this application. The method is performed by a UPF. The method is performed after embodiment in FIG. 3. In other words, embodiment in FIG. 3 is first performed, and embodiment in FIG. 4(b) is then performed.

The method includes the following steps.

Step 401b: A UPF receives a first data packet.

The first data packet is a downlink data packet.

Step 402b: The UPF adds path information of a data flow to the first data packet, to obtain a second data packet.

In an implementation method, the path information added by the UPF to the first data packet includes a path identifier of the data flow, to obtain the second data packet. Optionally, in addition to the path identifier of the data flow, the UPF further adds label information of the data flow to the first data packet.

In another implementation method, the path information added by the UPF to the first data packet includes identification information of satellites through which the data flow passes, to obtain the second data packet. Optionally, in addition to the identification information of the satellites through which the data flow passes, the UPF further adds label information of the data flow to the first data packet.

Step 403b: The UPF sends the second data packet.

In an implementation method, if the path information added by the UPF to the first data packet includes the path identifier of the data flow, to obtain the second data packet, after the UPF sends the second data packet to the gateway, the gateway determines a next-hop satellite based on a correspondence between the path identifier and the identification information of the satellites through which the data flow passes. The example in FIG. 2 is used as an example. It is assumed that the satellites through which the data flow passes include the satellite 3, the satellite 4, and the satellite 5. The UPF sends the second data packet to the gateway, and then the gateway obtains the path identifier of the data flow in the second data packet. The gateway determines a next-hop satellite, that is, the satellite 5, based on a correspondence between a path identifier stored on the gateway and the identification information of the satellites through which the data flow passes. Then, the gateway sends the second data packet to the satellite 5. Similarly, the satellite 5 sends the second data packet to the satellite 4, the satellite 4 sends the second data packet to the satellite 3, and the satellite 3 sends the second data packet to the satellite 6, so that the base station on the satellite 6 receives the second data packet. Optionally, if the UPF adds, in addition to the path identifier of the data flow, the label information of the data flow to the first data packet, both the gateway and the satellites through which the data flow passes may select a link to a next-hop satellite based on the label information in the second data packet. For example, there are a plurality of virtual links between the satellite 4 and the satellite 3, and the satellite 4 may select an optimal or better virtual link from the plurality of virtual links based on the label information.

In another implementation method, if the path information added by the UPF to the first data packet includes the identification information of the satellites through which the data flow passes, to obtain the second data packet, after the UPF sends the second data packet to the gateway, the gateway determines a next-hop satellite based on the identification information of the satellites through which the data flow in the second data packet passes. The example in FIG. 2 is used as an example. It is assumed that the satellites through which the data flow passes include the satellite 3, the satellite 4, and the satellite 5. The UPF sends the second data packet to the gateway, and then the gateway obtains the identification information of the satellites through which the data flow in the second data packet passes. The gateway determines a next-hop satellite, that is, the satellite 5, based on the identification information of the satellites through which the data flow passes. Then, the gateway sends the second data packet to the satellite 5. Similarly, the satellite 5 sends the second data packet to the satellite 4, the satellite 4 sends the second data packet to the satellite 3, and the satellite 3 sends the second data packet to the satellite 6, so that the base station on the satellite 6 receives the second data packet. Optionally, if the UPF adds, in addition to the identification information of the satellites through which the data flow passes, the label information of the data flow to the first data packet, both the gateway and the satellites through which the data flow passes may select a link to a next-hop satellite based on the label information in the second data packet. For example, there are a plurality of virtual links between the satellite 4 and the satellite 3, and the satellite 4 may select an optimal or better virtual link from the plurality of virtual links based on the label information.

It should be noted that, according to the solution, it is assumed that the gateway can parse the data packet. Therefore, the path identifier of the data flow in the data packet or the identification information of the satellites through which the data flow passes may be obtained, and the next-hop satellite is determined based on the path identifier of the data flow or the identification information of the satellites through which the data flow passes. In another implementation method, if the gateway cannot parse the data packet, after receiving the data packet, the gateway may send the data packet to an external controller. The external controller determines a next-hop satellite based on the path identifier of the data flow in the data packet or the identification information of the satellites through which the data flow passes, and notifies the gateway to send the data packet to the next-hop satellite.

According to the solution, the UPF adds the path information to the data packet, where the path information indicates the satellites through which the data flow passes, so that a gateway and a satellite that receive the data packet may route the data packet to a next satellite based on the path information, to implement correct routing of the data packet between satellites, implement efficient data transmission, and help ensure service quality.

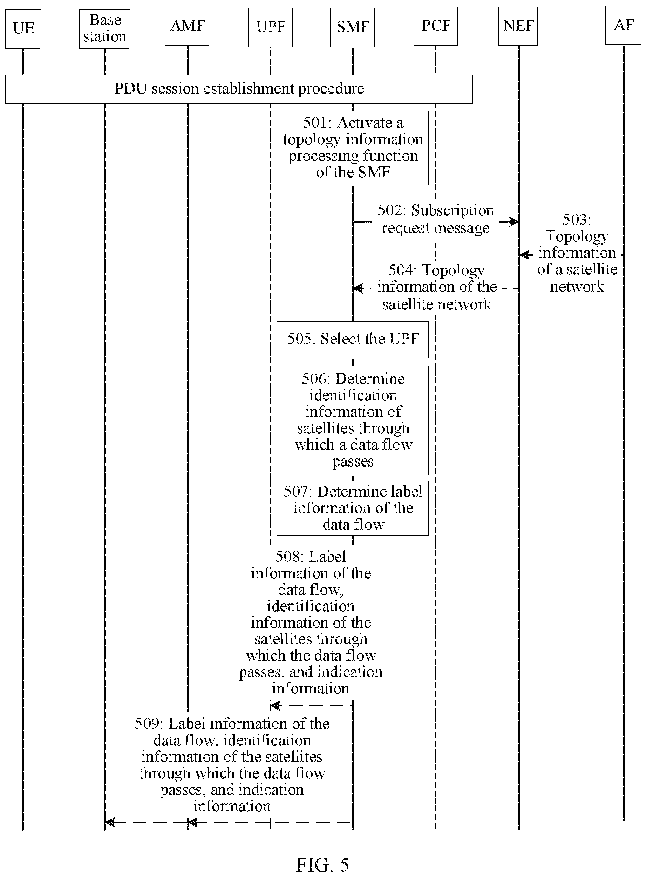

The following describes embodiments of FIG. 3, FIG. 4(a), and FIG. 4(b) with reference to embodiments of FIG. 5 to FIG. 10.

FIG. 5 is a schematic flowchart of a communication method according to an embodiment of this application. The method includes the following steps.

Step 501: An SMF activates a topology information processing function of the SMF.

In an implementation method, in a registration procedure of UE, the UE sends a registration request message or an uplink NAS message to an AMF via the base station. The registration request message or the uplink NAS message includes indication information, and the indication information indicates that the UE will access a satellite network. The AMF obtains a mobility management policy from a PCF based on the indication information, where the mobility management policy is related to access of the UE to the satellite network. Subsequently, the SMF may be aware of the mobility management policy in the AMF, and activate the topology information processing function of the SMF based on the mobility management policy in the AMF. The indication information may be a special field, for example, a field of specialUEfornon-terrestrialnetwork. Alternatively, the indication information is a special value. Alternatively, the indication information is a PCF set ID. Alternatively, the indication information is a special radio access technology (Radio Access Technology, RAT) value.

In another implementation method, the SMF activates the topology information processing function of the SMF based on a locally configured session management policy.

Step 502: The SMF sends a subscription request message to an NEF, where the subscription request message is used to subscribe to topology information of a satellite network.

In an implementation method, the subscription request message is an Nnef_EventExposure_Subscribe Request message, the message carries a non-terrestrial network topology event (non-terrestrial network topology event), and the event is used to subscribe to the topology information of the satellite network.

Step 503: When a topology of the satellite network changes, an AF sends the topology information of the satellite network to the NEF.

The AF may be a bearer network control plane network element, for example, an SDN controller.

The change of the topology of the satellite network includes but is not limited to one or more of the following: a change in a channel between the satellites in the satellite network, a change in a channel delay between the satellites, a change in a channel bandwidth between the satellites, and a change in channel overheads between the satellites.

The topology information includes the channel information between the satellites in the satellite network, and the channel information between the satellites in the satellite network includes one or more of the following: identification information of satellites in the satellite network, identification information of the satellites in the satellite network, identification information of a channel between the satellites in the satellite network, a channel delay between the satellites in the satellite network, a channel bandwidth between the satellites in the satellite network, and channel overheads between the satellites in the satellite network.

Step 504: The NEF sends the topology information of the satellite network to the SMF based on subscription of the SMF.

In an implementation method, the NEF sends a subscription response message to the SMF, where the subscription response message includes the topology information of the satellite network. Optionally, the subscription response message is an Nnef_EventExposure_Subscribe Response message.

In another implementation method, the SMF may not subscribe to the topology information of the satellite network from the NEF, but the NEF actively sends the topology information of the satellite network to the SMF after receiving the topology information of the satellite network from the AF.

Step 505: The SMF selects a UPF based on the topology information of the satellite network and identification information of a satellite on which the base station is located.

For a specific implementation of this step, refer to the descriptions of step S302. Details are not described again.

Step 506: The SMF determines, based on the topology information of the satellite network and characteristic information of a data flow, identification information of satellites through which the data flow passes.

The data flow may be, for example, a QoS flow, a service flow, or a data flow of another type. The characteristic information of the data flow includes a resource type of the data flow and/or a priority of the data flow. The resource type includes, for example, a video stream, an audio stream, and the like, and the priority may be represented by a 5QI.

For a specific implementation of step 506, refer to the related descriptions in embodiment in FIG. 3. Details are not described again.

Step 507: The SMF determines label information of the data flow based on the characteristic information of the data flow.

Because the base station and the UPF do not identify the characteristic information of the data flow, the SMF converts the characteristic information of the data flow into the label information of the data flow that can be identified by the base station and the UPF.

The label information of the data flow is used to select one link from a plurality of links between two adjacent routing nodes. For example, if there are a plurality of links between a routing node 1 and a routing node 2, the label information of the data flow is used to select one of the plurality of links.

For example, there is a correspondence between the 5QI and the label information of the data flow shown in Table 1.

**Table 1**

| 5QI | Label information of a data flow | Meaning of the label information of the data flow |
|---|---|---|
| 6 | 1 | IMS signal |
| 7 | 2 | TCP-based video |
| 8 | 3 | Live audio and video |
| ... | ... | ... |

According to Table 1, if a 5QI in characteristic information of a data flow is 6, it is determined that label information of the data flow is 1. If a 5QI in characteristic information of a data flow is 7, it is determined that label information of the data flow is 2. If a 5QI in characteristic information of a data flow is 8, it is determined that label information of the data flow is 3.

A sequence between step 506 and step 507 is not limited.

Step 508: The SMF sends, to the UPF, the label information of the data flow, the identification information of the satellites through which the data flow passes, and indication information.

The indication information indicates to add, to the data packet, the label information of the data flow and the identification information of the satellites through which the data flow passes.

In an implementation method, the SMF sends an N4 session establishment/modification request message to the UPF, where the message includes the label information of the data flow, the identification information of the satellites through which the data flow passes, and the indication information.

Step 509: The SMF sends, to the base station via the AMF, the label information of the data flow, the identification information of the satellites through which the data flow passes, and the indication information.

The indication information indicates to add, to the data packet, the label information of the data flow and the identification information of the satellites through which the data flow passes.

For example, the SMF sends an Namf_Communication_N1N2Message Transfer message to the AMF, where the message includes the label information of the data flow, the identification information of the satellites through which the data flow passes, and the indication information; and then the AMF sends an N2 PDU session request message to the base station, where the message includes the label information of the data flow, the identification information of the satellites through which the data flow passes, and the indication information.

Subsequently, in an uplink direction, when the base station receives an uplink data packet from the UE, the base station adds, to a packet header of the uplink data packet based on the indication information, the label information of the data flow and the identification information of the satellites through which the data flow passes. Then, the base station sends the uplink data packet to a next-hop satellite based on the identification information of the satellites through which the data flow passes. For example, the next-hop satellite is a satellite 1. Specifically, the base station may select one link from a plurality of links between the base station and the satellite 1 based on the label information of the data flow, or based on the label information of the data flow and load of each of the plurality of links between the base station and the satellite 1, and then send the uplink data packet to the satellite 1 through the link. After receiving the uplink data packet, the satellite 1 sends the uplink data packet to a next-hop satellite of the satellite 1 based on the identification information of the satellites through which the data flow in the uplink data packet passes. For example, the next-hop satellite is a satellite 2. Specifically, the satellite 1 may select one link from a plurality of links between the satellite 1 and the satellite 2 based on the label information of the data flow, or based on the label information of the data flow and load of each of the plurality of links between the satellite 1 and the satellite 2, and then send the uplink data packet to the satellite 2 through the link. By analogy, a last-hop satellite in the satellites through which the data flow passes sends the received uplink data packet to a gateway, and the gateway sends the uplink data packet to the UPF. For example, nodes on a transmission path of the uplink data packet are sequentially: UE->base station->satellite 1->satellite 2->satellite 3->gateway->UPF. Optionally, the base station may further add a timestamp (Timestamp) to the packet header, where the timestamp is used to select the identification information of the satellites through which the data flow passes. The satellite 1 on the transmission path is used as an example. The satellite 1 receives a plurality of uplink data packets within a period of time; obtains timestamps in the uplink data packets; determines, from the obtained plurality of timestamps, a timestamp closest to a current moment; obtains, from an uplink data packet that carries the timestamp, identification information of satellites through which a data flow passes; determines a next-hop satellite based on the identification information of the satellites through which the data flow passes; and sends the plurality of uplink data packets to the next-hop satellite. According to the method, it can be ensured that the identification information of the satellites through which the data flow passes is the latest, to help ensure that the path is updated in a timely manner.

Subsequently, in a downlink direction, when the UPF receives a downlink data packet, the UPF adds, to a packet header of the downlink data packet based on the indication information, the label information of the data flow and the identification information of the satellites through which the data flow passes. Then, the UPF sends the downlink data packet to the gateway. After receiving the downlink data packet, the gateway sends the downlink data packet to a next-hop satellite based on the identification information of the satellites through which the data flow in the downlink data packet passes. For example, the next-hop satellite is a satellite 4. Specifically, the gateway may select one link from a plurality of links between the gateway and the satellite 4 based on the label information of the data flow, or based on the label information of the data flow and load of each of the plurality of links between the gateway and the satellite 4, and then send the downlink data packet to the satellite 4 through the link. After receiving the downlink data packet, the satellite 4 sends the downlink data packet to a next-hop satellite of the satellite 4 based on the identification information of the satellites through which the data flow in the downlink data packet passes. For example, the next-hop satellite is a satellite 5. Specifically, the satellite 4 may select one link from a plurality of links between the satellite 4 and the satellite 5 based on the label information of the data flow, or based on the label information of the data flow and load of each of the plurality of links between the satellite 4 and the satellite 5, and then send the downlink data packet to the satellite 5 through the link. By analogy, a last-hop satellite in the satellites through which the data flow passes sends the received downlink data packet to the base station, and the base station sends the downlink data packet to the UE. For example, nodes on a transmission path of the downlink data packet are sequentially: UPF->gateway->satellite 4->satellite 5->base station->UE. Optionally, the UPF may further add a timestamp (Timestamp) to the packet header, where the timestamp is used to select the identification information of the satellites through which the data flow passes. The satellite 4 on the transmission path is used as an example. The satellite 4 receives a plurality of downlink data packets within a period of time; obtains timestamps in the downlink data packets; determines, from the obtained plurality of timestamps, a timestamp closest to a current moment; obtains, from a downlink data packet that carries the timestamp, identification information of satellites through which a data flow passes; determines a next-hop satellite based on the identification information of the satellites through which the data flow passes; and sends the plurality of downlink data packets to the next-hop satellite. According to the method, it can be ensured that the identification information of the satellites through which the data flow passes is the latest, to help ensure that the path is updated in a timely manner.

According to the solution, the SMF obtains the topology information of the satellite network from the AF; determines, based on the topology information of the satellite network, the identification information of the satellites through which the data flow passes; and may further determine the label information of the data flow; and sends the identification information of the satellites through which the data flow passes and the label information of the data flow to the base station and the UPF, so that the base station and the UPF ensure transmission of the data flow based on the identification information of the satellites through which the data flow passes and the label information of the data flow, to help improve transmission quality of the data flow and ensure service quality.

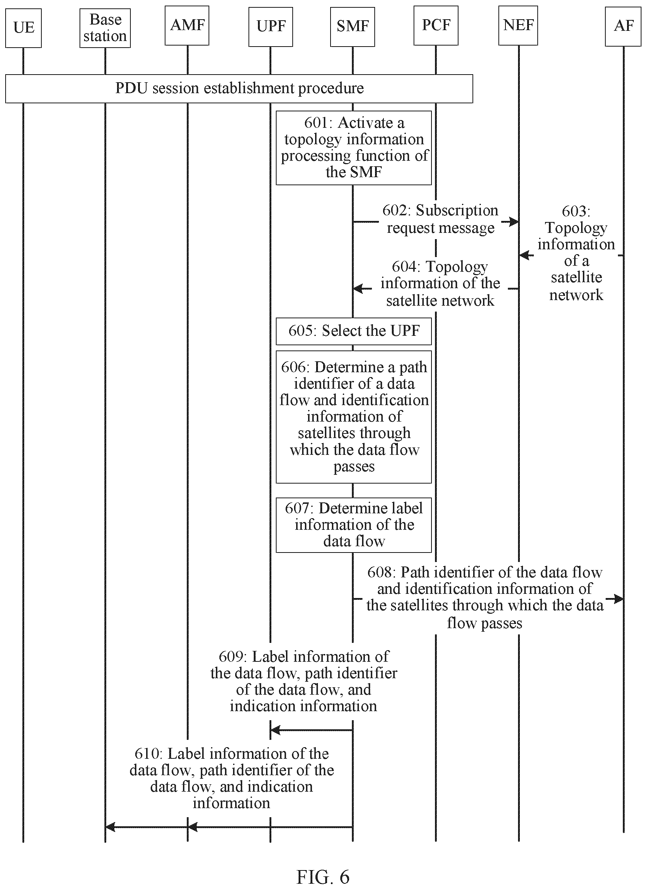

FIG. 6 is a schematic flowchart of a communication method according to an embodiment of this application. The method includes the following steps.

Step 601 to step 605 are the same as step 501 to step 505.

Step 606: The SMF determines, based on the topology information of the satellite network and characteristic information of a data flow, a path identifier of the data flow and identification information of satellites through which the data flow passes.

For a method for determining, by the SMF based on the topology information of the satellite network and the characteristic information of the data flow, the identification information of the satellites through which the data flow passes, refer to the descriptions in step 505.

After determining the identification information of the satellites through which the data flow passes, the SMF allocates a path identifier. The path identifier is used to identify a path that indicates the data flow, and the path includes the satellites through which the data flow passes. Therefore, there is a correspondence between the path identifier of the data flow and the identification information of the satellites through which the data flow passes.

Step 607 is the same as step 507.

Step 608: The SMF sends, to the AF, the path identifier of the data flow and the identification information of the satellites through which the data flow passes.

After receiving the path identifier of the data flow and the identification information of the satellites through which the data flow passes, the AF sends the path identifier of the data flow and the identification information of the satellites through which the data flow passes to the satellites through which the data flow passes, and further sends the path identifier of the data flow and the identification information of the satellites through which the data flow passes to the gateway.

In an implementation method, the SMF may send SM_Calculated_Information to the AF, where the SM_Calculated_Information includes the path identifier of the data flow and the identification information of the satellites through which the data flow passes.

Step 608 may be performed after step 606 and before step 607, or may be performed after step 607.

Step 609: The SMF sends, to the UPF, the label information of the data flow, the path identifier of the data flow, and the indication information.

The indication information indicates to add the label information of the data flow and the path identifier of the data flow to a data packet.

In an implementation method, the SMF sends an N4 session establishment/modification request message to the UPF, where the message includes the label information of the data flow, the path identifier of the data flow, and indication information.

Step 610: The SMF sends, to the base station via the AMF, the label information of the data flow, the path identifier of the data flow, and the indication information.

The indication information indicates to add the label information of the data flow and the path identifier of the data flow to a data packet.

For example, the SMF sends an Namf_Communication _N1N2Message Transfer message to the AMF, where the message includes the label information of the data flow, the path identifier of the data flow, and the indication information; and then the AMF sends an N2 PDU session request message to the base station, where the message includes the label information of the data flow, the path identifier of the data flow, and the indication information.

Subsequently, in an uplink direction, when the base station receives an uplink data packet from the UE, the base station adds, to a packet header of the uplink data packet based on the indication information, the label information of the data flow and the path identifier of the data flow. Then, the base station sends the uplink data packet to a next-hop satellite based on the identification information of the satellites through which the data flow passes. For example, the next-hop satellite is a satellite 1. Specifically, the base station may select one link from a plurality of links between the base station and the satellite 1 based on the label information of the data flow, or based on the label information of the data flow and load of each of the plurality of links between the base station and the satellite 1, and then send the uplink data packet to the satellite 1 through the link. After receiving the uplink data packet, the satellite 1 determines, based on the path identifier of the data flow in the uplink data packet, the identification information of the satellites through which the data flow corresponding to the path identifier of the data flow passes, and then sends the uplink data packet to a next-hop satellite of the satellite 1 based on the identification information of the satellites through which the data flow passes. For example, the next-hop satellite is a satellite 2. Specifically, the satellite 1 may select one link from a plurality of links between the satellite 1 and the satellite 2 based on the label information of the data flow, or based on the label information of the data flow and load of each of the plurality of links between the satellite 1 and the satellite 2, and then send the uplink data packet to the satellite 2 through the link. By analogy, a last-hop satellite in the satellites through which the data flow passes sends the received uplink data packet to a gateway, and the gateway sends the uplink data packet to the UPF. For example, nodes on a transmission path of the uplink data packet are sequentially: UE->base station->satellite 1->satellite 2->satellite 3->gateway->UPF. Optionally, the base station may further add a timestamp (Timestamp) to the packet header, where the timestamp is used to select a latest path identifier. The satellite 1 on the transmission path is used as an example. The satellite 1 receives a plurality of uplink data packets within a period of time; obtains timestamps in the uplink data packets; determines, from the obtained plurality of timestamps, a timestamp closest to a current moment; obtains, from an uplink data packet that carries the timestamp, a path identifier of a data flow; determines identification information of satellites through which the data flow corresponding to the path identifier of the data flow passes; then determines a next-hop satellite based on the identification information of the satellites through which the data flow passes; and sends the plurality of uplink data packets to the next-hop satellite. According to the method, it can be ensured that the path node is the latest, to help ensure that the path is updated in a timely manner.

Subsequently, in a downlink direction, when the UPF receives a downlink data packet, the UPF adds, to a packet header of the downlink data packet based on the indication information, the label information of the data flow and the path identifier of the data flow. Then, the UPF sends the downlink data packet to the gateway. After receiving the downlink data packet, the gateway determines, based on the path identifier of the data flow in the downlink data packet, the identification information of the satellites through which the data flow corresponding to the path identifier of the data flow passes, and then sends the downlink data packet to a next-hop satellite based on the identification information of the satellites through which the data flow passes. For example, the next-hop satellite is a satellite 4. Specifically, the gateway may select one link from a plurality of links between the gateway and the satellite 4 based on the label information of the data flow, or based on the label information of the data flow and load of each of the plurality of links between the gateway and the satellite 4, and then send the downlink data packet to the satellite 4 through the link. After receiving the downlink data packet, the satellite 4 determines, based on the path identifier of the data flow in the downlink data packet, the identification information of the satellites through which the data flow corresponding to the path identifier of the data flow passes, and then sends the downlink data packet to a next-hop satellite of the satellite 4 based on the identification information of the satellites through which the data flow passes. For example, the next-hop satellite is a satellite 5. Specifically, the satellite 4 may select one link from a plurality of links between the satellite 4 and the satellite 5 based on the label information of the data flow, or based on the label information of the data flow and load of each of the plurality of links between the satellite 4 and the satellite 5, and then send the downlink data packet to the satellite 5 through the link. By analogy, a last-hop satellite in the satellites through which the data flow passes sends the received downlink data packet to the base station, and the base station sends the downlink data packet to the UE. For example, nodes on a transmission path of the downlink data packet are sequentially: UPF->gateway->satellite 4->satellite 5->satellite 6->base station->UE. Optionally, the UPF may further add a timestamp (Timestamp) to the packet header, where the timestamp is used to select a latest path identifier. The satellite 4 on the transmission path is used as an example. The satellite 4 receives a plurality of downlink data packets within a period of time; obtains timestamps in the downlink data packets; determines, from the obtained plurality of timestamps, a timestamp closest to a current moment; obtains a path identifier from a downlink data packet that carries the timestamp; determines identification information of satellites through which a data flow corresponding to the path identifier of the data flow passes; then determines a next-hop satellite based on the identification information of the satellites through which the data flow passes; and sends the plurality of downlink data packets to the next-hop satellite. According to the method, it can be ensured that the path identifier is the latest, to help ensure that the path is updated in a timely manner.

According to the solution, the SMF obtains the topology information of the satellite network from the AF; determines the path identifier of the data flow based on the topology information of the satellite network; further determines the label information of the data flow; and sends the path identifier of the data flow and the label information of the data flow to the base station and the UPF, so that the base station and the UPF ensure transmission of the data flow based on the path identifier of the data flow and the label information of the data flow, to help improve transmission quality of the data flow and ensure service quality.

A main difference between embodiment in FIG. 6 and embodiment in FIG. 5 lies in that in embodiment in FIG. 6, the base station or the UPF does not add, to the packet header of the data packet, the identification information of the satellites through which the data flow passes, but adds the path identifier of the data flow. This can reduce a total length of the data packet, help reduce resource overheads, improve a transmission speed, and ensure service quality.

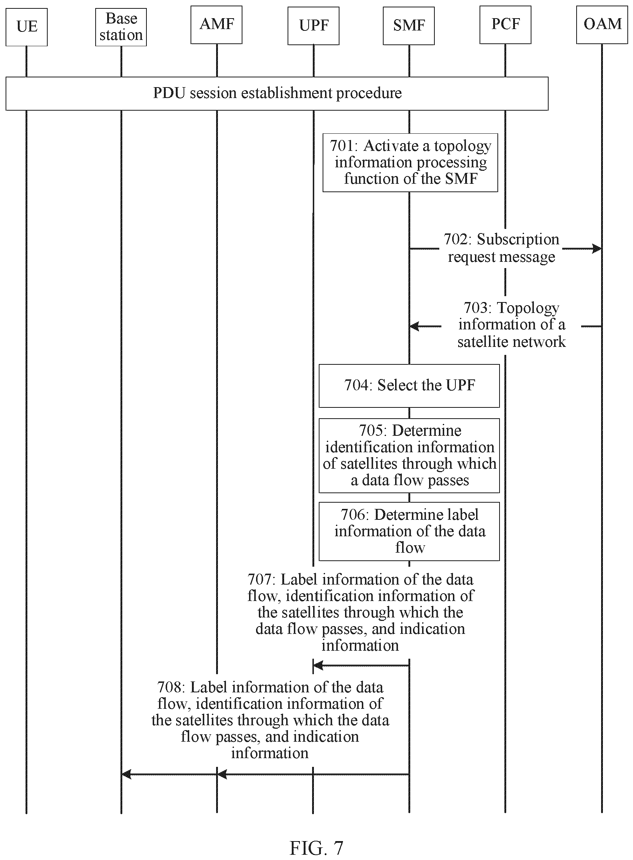

FIG. 7 is a schematic flowchart of a communication method according to an embodiment of this application. The method includes the following steps.

Step 701 is the same as step 501.

Step 702: The SMF sends a subscription request message to an OAM, where the subscription request message is used to subscribe to topology information of a satellite network.

Step 703: When a topology of the satellite network changes, the OAM sends the topology information of the satellite network to the SMF based on subscription of the SMF.

A bearer network control plane network element, for example, an SDN controller, is disposed in the OAM. Therefore, that the OAM sends the topology information of the satellite network to the SMF may be that the bearer network control plane network element in the OAM sends the topology information of the satellite network to the SMF.

The change of the topology of the satellite network includes but is not limited to one or more of the following: a change in a channel between the satellites in the satellite network, a change in a channel delay between the satellites, a change in a channel bandwidth between the satellites, and a change in channel overheads between the satellites.

The topology information includes the channel information between the satellites in the satellite network, and the channel information between the satellites in the satellite network includes one or more of the following: identification information of satellites in the satellite network, identification information of the satellites in the satellite network, identification information of a channel between the satellites in the satellite network, a channel delay between the satellites in the satellite network, a channel bandwidth between the satellites in the satellite network, and channel overheads between the satellites in the satellite network.

In an implementation method, the OAM sends a subscription response message to the SMF, where the subscription response message includes the topology information of the satellite network.

In another implementation method, the SMF may not subscribe to the topology information of the satellite network from the OAM, but the OAM actively sends the topology information of the satellite network to the SMF after determining that the topology of the satellite network changes.

Step 704 to step 708 are the same as step 505 to step 509.

Subsequently, for an uplink data packet transmission method and a downlink data packet transmission method, refer to the related descriptions in embodiment in FIG. 5. Details are not described again.

According to the solution, the SMF obtains the topology information of the satellite network from the OAM; determines, based on the topology information of the satellite network, the identification information of the satellites through which the data flow passes; and further determines the label information of the data flow; and sends the identification information of the satellites through which the data flow passes and the label information of the data flow to the base station and the UPF, so that the base station and the UPF ensure transmission of the data flow based on the identification information of the satellites through which the data flow passes and the label information of the data flow, to help improve transmission quality of the data flow and ensure service quality.

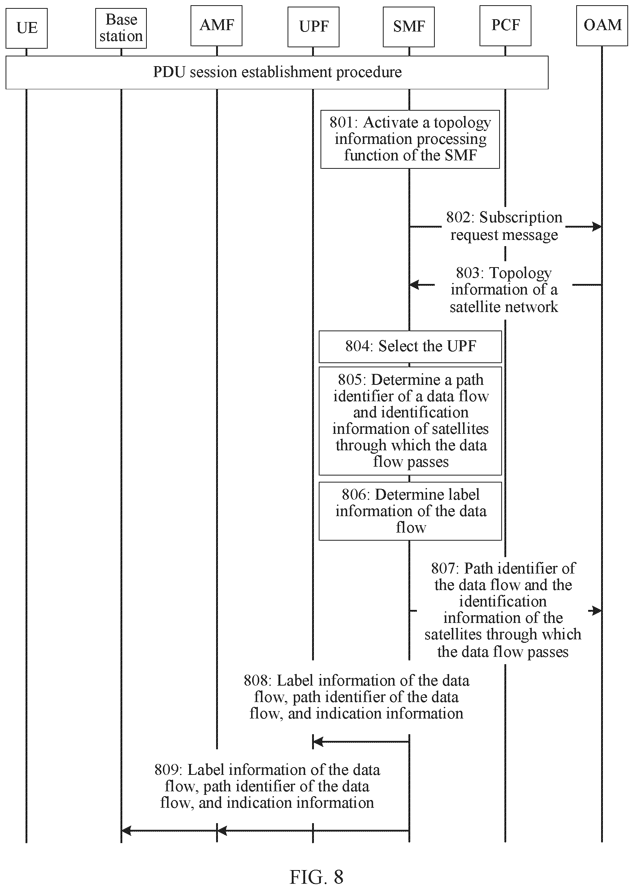

FIG. 8 is a schematic flowchart of a communication method according to an embodiment of this application. The method includes the following steps.

Step 801 to step 804 are the same as step 701 to step 704.

Step 805 and step 806 are the same as step 606 and step 607.

Step 807: The SMF sends, to the OAM, the path identifier of the data flow and the identification information of the satellites through which the data flow passes.

The SMF may send, to the OAM, path identifiers of a plurality of data flows and identification information of the satellites through which the data flow corresponding to each path identifier of the data flow passes.

After receiving the path identifier of the data flow and the identification information of the satellites through which the data flow passes, the OAM sends the path identifier of the data flow and the identification information of the satellites through which the data flow passes to each satellite indicated by the identification information of the satellites through which the data flow passes, and further sends the path identifier of the data flow and the identification information of the satellites through which the data flow passes to the gateway.

In an implementation method, the SMF may send SM_Calculated_Information to the OAM, where the SM_Calculated_Information includes the path identifier of the data flow and the identification information of the satellites through which the data flow passes.

Step 807 may be performed after step 805 and before step 806, or may be performed after step 806.

Step 808 and step 809 are the same as step 609 and step 610.

Subsequently, for an uplink data packet transmission method and a downlink data packet transmission method, refer to the related descriptions in embodiment in FIG. 6. Details are not described again.

According to the solution, the SMF obtains the topology information of the satellite network from the OAM; determines the path identifier of the data flow based on the topology information of the satellite network; further determines the label information of the data flow; and sends the path identifier of the data flow and the label information of the data flow to the base station and the UPF, so that the base station and the UPF ensure transmission of the data flow based on the path identifier of the data flow and the label information of the data flow, to help improve transmission quality of the data flow and ensure service quality.

A main difference between embodiment in FIG. 8 and embodiment in FIG. 7 lies in that in embodiment in FIG. 8, the base station or the UPF does not add, to the packet header of the data packet, the identification information of the satellites through which the data flow passes, but adds the path identifier of the data flow. This can reduce a total length of the data packet, help reduce resource overheads, improve a transmission speed, and ensure service quality.

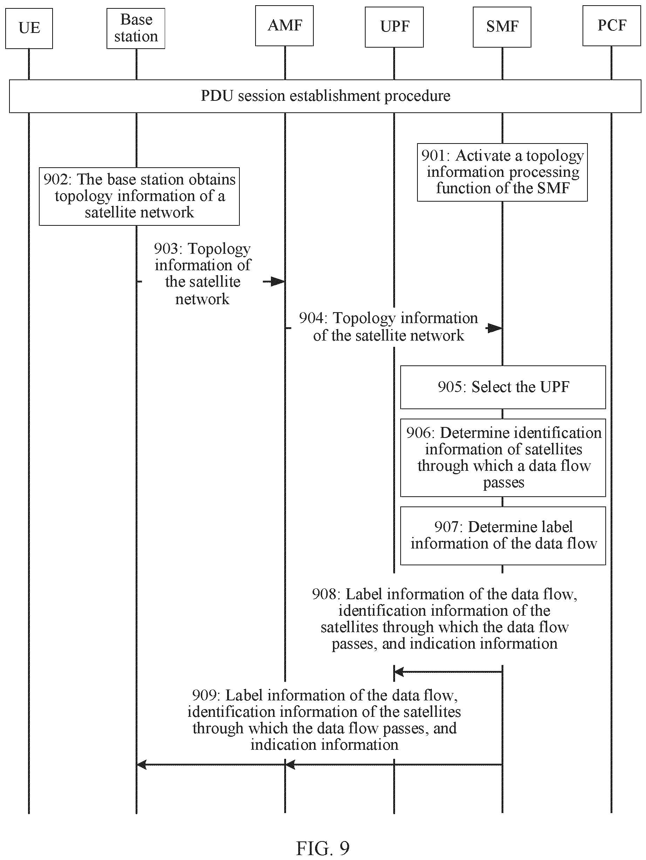

FIG. 9 is a schematic flowchart of a communication method according to an embodiment of this application. The method includes the following steps.

Step 901 is the same as step 501.

Step 902: The base station obtains topology information of a satellite network.

In an implementation method, a satellite on which a base station is located is considered as a routing forwarder, and the topology information of the satellite network is collected by using a border gateway protocol-link state (border gateway protocol-link state, BGP-LS) mechanism, and then the base station on the satellite obtains the topology information of the satellite network from the satellite.

Step 903: The base station sends the topology information of the satellite network to an AMF.

In an implementation method, the base station sends an N2 message to the AMF, where the N2 message includes the topology information of the satellite network.

Step 904: The AMF sends topology information of the satellite network to the SMF.

In an implementation method, the AMF sends an Namf_Communication_Information message to the SMF, where the message includes the topology information of the satellite network.

Step 905 to step 909 are the same as step 505 to step 509.

Subsequently, for an uplink data packet transmission method and a downlink data packet transmission method, refer to the related descriptions in embodiment in FIG. 5. Details are not described again.

According to the solution, the satellite on which the base station is located may collect the topology information of the satellite network, and then the base station sends the topology information of the satellite network to the SMF via the AMF. Then, the SMF determines, based on the topology information of the satellite network, the identification information of the satellites through which the data flow passes; and further determines the label information of the data flow; and sends the identification information of the satellites through which the data flow passes and the label information of the data flow to the base station and the UPF, so that the base station and the UPF ensure transmission of the data flow based on the identification information of the satellites through which the data flow passes and the label information of the data flow, to help improve transmission quality of the data flow and ensure service quality.

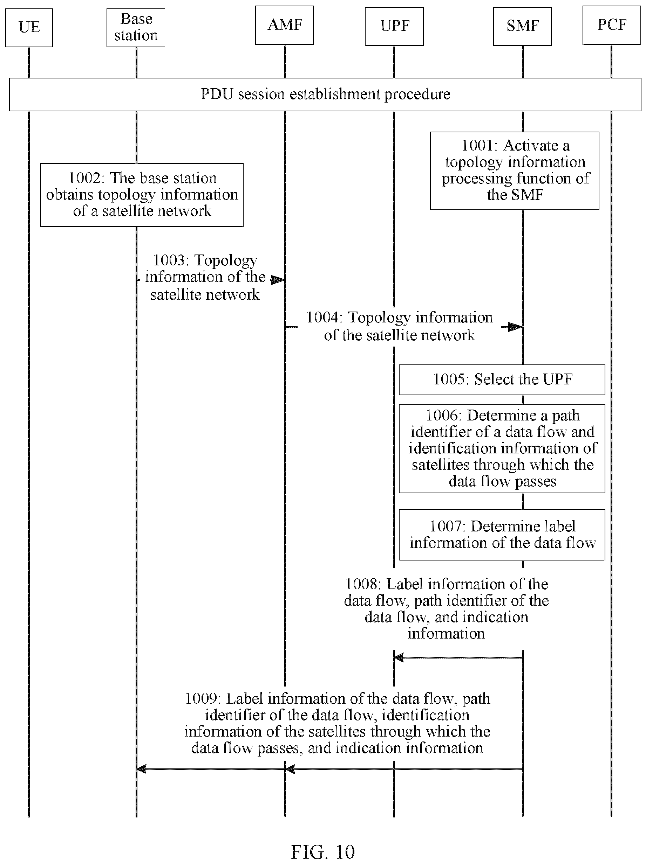

FIG. 10 is a schematic flowchart of a communication method according to an embodiment of this application. The method includes the following steps.

Step 1001 to step 1005 are the same as step 901 to step 905.

Step 1006 and step 1007 are the same as step 606 and step 607.

Step 1008: The SMF sends, to the UPF, the label information of the data flow, the path identifier of the data flow, and the indication information.

The indication information indicates to add the label information of the data flow and the path identifier of the data flow to a data packet.

In an implementation method, the SMF sends an N4 session establishment/modification request message to the UPF, where the message includes the label information of the data flow, the path identifier of the data flow, and indication information.

Step 1009: The SMF sends, to the base station via the AMF, the label information of the data flow, the path identifier of the data flow, the identification information of the satellites through which the data flow passes, and the indication information.

The indication information indicates to add the label information of the data flow and the path identifier of the data flow to a data packet.

For example, the SMF sends an Namf_Communication _N1N2Message Transfer message to the AMF, where the message includes the label information of the data flow, the path identifier of the data flow, the identification information of the satellites through which the data flow passes, and the indication information; and then, the AMF sends an N2 PDU session request message to the base station, where the message includes the label information of the data flow, the path identifier of the data flow, the identification information of the satellites through which the data flow passes, and the indication information.

In addition, the AMF or the base station further sends the path identifier of the data flow and the identification information of the satellites through which the data flow passes to each satellite indicated by the identification information of the satellites through which the data flow passes, and further sends the path identifier of the data flow and the identification information of the satellites through which the data flow passes to the gateway.

Subsequently, for an uplink data packet transmission method and a downlink data packet transmission method, refer to the related descriptions in embodiment in FIG. 6. Details are not described again.

According to the solution, the satellite on which the base station is located may collect the topology information of the satellite network, and then the base station sends the topology information of the satellite network to the SMF via the AMF. Then, the SMF determines, based on the topology information of the satellite network, the path identifier of the data flow and the identification information of the satellites through which the data flow passes; and further determines the label information of the data flow; and sends the path identifier of the data flow and the label information of the data flow to the base station and the UPF, so that the base station and the UPF ensure transmission of the data flow based on the path identifier of the data flow and the label information of the data flow, to help improve transmission quality of the data flow.

A main difference between embodiment in FIG. 10 and embodiment in FIG. 9 lies in that in embodiment in FIG. 10, the base station or the UPF does not add, to the packet header of the data packet, the identification information of the satellites through which the data flow passes, but adds the path identifier of the data flow. This can reduce a total length of the data packet, help reduce resource overheads, improve a transmission speed, and ensure service quality.

It may be understood that, to implement the functions in embodiments, the core network control plane network element, the bearer network control plane network element, the access network device, or the user plane network element includes a corresponding hardware structure and/or software module for performing each function. A person skilled in the art should be easily aware that, in this application, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

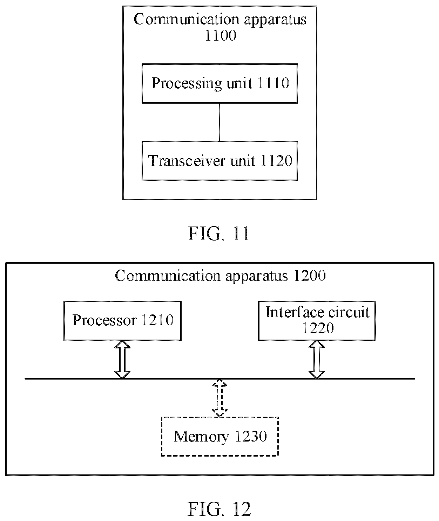

FIG. 11 and FIG. 12 are diagrams of structures of possible communication apparatuses according to an embodiment of this application. The communication apparatuses may be configured to implement functions of the core network control plane network element (for example, the SMF), the bearer network control plane network element (for example, the AF and the OAM), the access network device (for example, the base station), or the user plane network element (for example, the UPF) in the method embodiments in FIG. 3, FIG. 4(a), FIG. 4(b), and FIG. 5 to FIG. 10. Therefore, beneficial effects of the foregoing method embodiments can also be implemented. In embodiments of this application, the communication apparatus may be a core network control plane network element, a bearer network control plane network element, an access network device, or a user plane network element, or may be a module (for example, a chip) used in a core network control plane network element, a bearer network control plane network element, an access network device, or a user plane network element.

As shown in FIG. 11, the communication apparatus 1100 includes a processing unit 1110 and a transceiver unit 1120. The communication apparatus 1100 is configured to implement the functions of the core network control plane network element, the bearer network control plane network element, the access network device, or the user plane network element in the foregoing method embodiments.

When the communication apparatus is configured to perform the function of the core network control plane network element, the transceiver unit 1120 is configured to obtain topology information of a satellite network, where the topology information includes channel information between satellites in the satellite network; and the processing unit 1110 is configured to determine a user plane network element based on the topology information and identification information of a satellite on which an access network device is located.

In a possible implementation method, the processing unit 1110 is further configured to determine path information of a data flow based on the topology information and characteristic information of the data flow, where the path information indicates satellites through which the data flow passes; and the transceiver unit 1120 is further configured to send the path information to the access network device and the user plane network element.

In a possible implementation method, the transceiver unit 1120 is further configured to send indication information to the access network device and the user plane network element, where the indication information indicates to add the path information to a data packet of the data flow.

In a possible implementation method, the processing unit 1110 is further configured to determine label information of the data flow corresponding to the characteristic information, where the label information is used to select a link between the satellites through which the data flow passes, and the link between the satellites through which the data flow passes is included in a channel between the satellites through which the data flow passes; and the transceiver unit 1120 is further configured to send the label information to the access network device and the user plane network element.

In a possible implementation method, the transceiver unit 1120 is further configured to send indication information to the access network device and the user plane network element, where the indication information indicates to add the label information and the path information to a data packet of the data flow.

In a possible implementation method, the path information includes identification information of the satellites through which the data flow passes.

In a possible implementation method, the path information includes a path identifier, the path identifier indicates a path of the data flow, and the path includes the satellites through which the data flow passes.

In a possible implementation method, the transceiver unit 1120 is further configured to send, to a bearer network control plane network element or a mobility management network element, the path identifier and identification information of the satellites through which the data flow passes.

In a possible implementation method, the transceiver unit 1120 is specifically configured to receive the topology information from the bearer network control plane network element or the satellite on which the access network device is located.

In a possible implementation method, the processing unit 1110 is specifically configured to determine the user plane network element based on the topology information, the identification information of the satellite on which the access network device is located, and location information of at least one gateway.

In a possible implementation method, the processing unit 1110 is specifically configured to determine the user plane network element based on the topology information, the identification information of the satellite on which the access network device is located, location information of the access network device, and location information of at least one gateway.

In a possible implementation method, the processing unit 1110 is specifically configured to determine the user plane network element based on the topology information, the identification information of the satellite on which the access network device is located, and location information of the access network device.

In a possible implementation method, the processing unit 1110 is specifically configured to determine the user plane network element that can meet a session requirement based on the topology information and the identification information of the satellite on which the access network device is located.

In a possible implementation method, the channel information includes one or more of the following: identification information of the satellites in the satellite network, identification information of a channel between the satellites in the satellite network, a channel delay between the satellites in the satellite network, a channel bandwidth between the satellites in the satellite network, and channel overheads between the satellites in the satellite network.

When the communication apparatus is configured to perform the function of the access network device or the user plane network element, the transceiver unit 1120 is configured to receive a first data packet; and the processing unit 1110 is configured to add path information of a data flow to the first data packet, to obtain a second data packet, where the path information includes a path identifier of the data flow or identification information of satellites through which the data flow passes, the path identifier indicates a path of the data flow, and the path includes the satellites through which the data flow passes; and the transceiver unit 1120 is further configured to send the second data packet.

In a possible implementation method, the transceiver unit 1120 is further configured to receive the path information from a core network control plane network element.

In a possible implementation method, the transceiver unit 1120 is further configured to receive indication information from the core network control plane network element, where the indication information indicates to add the path information to a data packet of the data flow.

In a possible implementation method, the transceiver unit 1120 is further configured to receive label information of the data flow from the core network control plane network element, where the label information is used to select a link between the satellites through which the data flow passes, and the link between the satellites through which the data flow passes is included in a channel between the satellites through which the data flow passes; and the processing unit 1110 is further configured to add the label information to the first data packet.

In a possible implementation method, the transceiver unit 1120 is further configured to receive indication information from the core network control plane network element, where the indication information indicates to add the label information and the path information to a data packet of the data flow.

When the communication apparatus is configured to perform the function of the bearer network control plane network element, the transceiver unit 1120 is configured to send topology information of a satellite network to a core network control plane network element, where the topology information includes channel information between satellites in the satellite network; receive, from the core network control plane network element, a path identifier of the data flow and identification information of satellites through which the data flow passes, where the path identifier indicates a path of the data flow, the path includes the satellites through which the data flow passes, and the path identifier and the identification information of the satellites through which the data flow passes are determined based on the topology information; and send, to the satellites through which the data flow passes, the path identifier of the data flow and the identification information of the satellites through which the data flow passes.

In a possible implementation method, the transceiver unit 1120 is further configured to send the path identifier of the data flow and the identification information of the satellites through which the data flow passes to a gateway.

In a possible implementation method, the channel information includes one or more of the following: identification information of the satellites in the satellite network, identification information of a channel between the satellites in the satellite network, a channel delay between the satellites in the satellite network, a channel bandwidth between the satellites in the satellite network, and channel overheads between the satellites in the satellite network.

For more detailed descriptions about the processing unit 1110 and the transceiver unit 1120, directly refer to related descriptions in the foregoing method embodiments. Details are not described herein again.

A communication apparatus 1200 shown in FIG. 12 includes a processor 1210 and an interface circuit 1220. The processor 1210 and the interface circuit 1220 are coupled to each other. It can be understood that, the interface circuit 1220 may be a transceiver or an input/output interface. Optionally, the communication apparatus 1200 may further include a memory 1230, configured to: store instructions to be executed by the processor 1210, store input data required by the processor 1210 to run the instructions, or store data generated after the processor 1210 runs the instructions.

When the communication apparatus 1200 is configured to implement the foregoing method embodiments, the processor 1210 is configured to implement a function of the processing unit 1110, and the interface circuit 1220 is configured to implement a function of the transceiver unit 1120.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

The method steps in embodiments of this application may be implemented by hardware, or may be implemented by the processor executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may alternatively exist in a base station or a terminal as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, the procedure or functions according to embodiments of this application are all or partially generated. The computer may be a general-purpose computer, a dedicated computer, a computer network, a base station, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include both a volatile storage medium and a non-volatile storage medium.

In embodiments of this application, unless otherwise specified or there is a logic conflict, terms and/or descriptions in different embodiments are consistent and may be referenced by each other. Technical features in different embodiments may be combined to form a new embodiment based on an internal logical relationship.

In this application, "at least one" means one or more, and "a plurality of" means two or more. The term "and/or" describes an association relationship between associated objects, and indicates that three relationships may exist. For example, A and/or B may indicate the following three cases: A exists alone, both A and B exist, and B exists alone, where A and B may be singular or plural. In the text descriptions of this application, the character "/" generally indicates an "or" relationship between the associated objects. In a formula in this application, the character "/" indicates a "division" relationship between the associated objects.

It may be understood that, various numbers in embodiments of this application are merely used for differentiation for ease of descriptions, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
obtaining topology information of a satellite network, wherein the topology information comprises channel information between satellites in the satellite network; and
determining a user plane network element based on the topology information and identification information of a satellite on which an access network device is located.

2. The method according to claim 1, further comprising:
determining path information of a data flow based on the topology information and characteristic information of the data flow, wherein the path information indicates satellites through which the data flow passes; and
sending the path information to the access network device and the user plane network element.

3. The method according to claim 2, further comprising:
sending indication information to the access network device and the user plane network element, wherein the indication information indicates to add the path information to a data packet of the data flow.

4. The method according to claim 1 or 2, further comprising:
determining label information of the data flow corresponding to the characteristic information, wherein the label information is used to select a link between the satellites through which the data flow passes, and the link between the satellites through which the data flow passes is comprised in a channel between the satellites through which the data flow passes; and
sending the label information to the access network device and the user plane network element.

5. The method according to claim 4, further comprising:
sending indication information to the access network device and the user plane network element, wherein the indication information indicates to add the label information and the path information to a data packet of the data flow.

6. The method according to any one of claims 1 to 5, wherein the path information comprises identification information of the satellites through which the data flow passes.

7. The method according to any one of claims 1 to 5, wherein the path information comprises a path identifier, the path identifier indicates a path of the data flow, and the path comprises the satellites through which the data flow passes.

8. The method according to claim 7, further comprising:
sending, to a bearer network control plane network element or a mobility management network element, the path identifier and identification information of the satellites through which the data flow passes.

9. The method according to any one of claims 1 to 8, wherein the obtaining topology information of a satellite network comprises:
receiving the topology information from the bearer network control plane network element or the satellite on which the access network device is located.

10. The method according to any one of claims 1 to 9, wherein the determining a user plane network element based on the topology information and identification information of a satellite on which an access network device is located comprises:
determining the user plane network element based on the topology information, the identification information of the satellite on which the access network device is located, and location information of at least one gateway.

11. The method according to any one of claims 1 to 9, wherein the determining a user plane network element based on the topology information and identification information of a satellite on which an access network device is located comprises:
determining the user plane network element based on the topology information, the identification information of the satellite on which the access network device is located, location information of the access network device, and location information of at least one gateway.

12. The method according to any one of claims 1 to 9, wherein the determining a user plane network element based on the topology information and identification information of a satellite on which an access network device is located comprises:
determining the user plane network element based on the topology information, the identification information of the satellite on which the access network device is located, and location information of the access network device.

13. The method according to any one of claims 1 to 9, wherein the determining a user plane network element based on the topology information and identification information of a satellite on which an access network device is located comprises:
determining the user plane network element that is capable of meeting a session requirement based on the topology information and the identification information of the satellite on which the access network device is located.

14. The method according to any one of claims 1 to 13, wherein the channel information comprises one or more of the following:
identification information of the satellites in the satellite network, identification information of a channel between the satellites in the satellite network, a channel delay between the satellites in the satellite network, a channel bandwidth between the satellites in the satellite network, and channel overheads between the satellites in the satellite network.

15. A communication method, comprising:
receiving a first data packet;
adding path information of a data flow to the first data packet, to obtain a second data packet, wherein the path information comprises a path identifier of the data flow or identification information of satellites through which the data flow passes, the path identifier indicates a path of the data flow, and the path comprises the satellites through which the data flow passes; and
sending the second data packet.

16. The method according to claim 15, further comprising:
receiving the path information from a core network control plane network element.

17. The method according to claim 15 or 16, further comprising:
receiving indication information from the core network control plane network element, wherein the indication information indicates to add the path information to a data packet of the data flow.

18. The method according to claim 15 or 16, further comprising:
receiving label information of the data flow from the core network control plane network element, wherein the label information is used to select a link between the satellites through which the data flow passes, and the link between the satellites through which the data flow passes is comprised in a channel between the satellites through which the data flow passes; and
adding the label information to the first data packet.

19. The method according to claim 18, further comprising:
receiving indication information from the core network control plane network element, wherein the indication information indicates to add the label information and the path information to a data packet of the data flow.

20. A communication method, comprising:
sending topology information of a satellite network to a core network control plane network element, wherein the topology information comprises channel information between satellites in the satellite network;
receiving, from the core network control plane network element, a path identifier of the data flow and identification information of satellites through which the data flow passes, wherein the path identifier indicates a path of the data flow, the path comprises the satellites through which the data flow passes, and the path identifier and the identification information of the satellites through which the data flow passes are determined based on the topology information; and
sending, to the satellites through which the data flow passes, the path identifier of the data flow and the identification information of the satellites through which the data flow passes.

21. The method according to claim 20, further comprising:
sending, to a gateway or an external controller, the path identifier of the data flow and the identification information of the satellites through which the data flow passes.

22. The method according to claim 20 or 21, wherein the channel information comprises one or more of the following:
identification information of the satellites in the satellite network, identification information of a channel between the satellites in the satellite network, a channel delay between the satellites in the satellite network, a channel bandwidth between the satellites in the satellite network, and channel overheads between the satellites in the satellite network.

23. A communication apparatus, comprising a module configured to perform the method according to any one of claims 1 to 14, a module configured to perform the method according to any one of claims 15 to 19, or a module configured to perform the method according to any one of claims 20 to 22.

24. A communication apparatus, comprising a processor and an interface circuit, wherein the interface circuit is configured to receive a signal from another communication apparatus other than the communication apparatus and transmit the signal to the processor, or send a signal from the processor to another communication apparatus other than the communication apparatus; and the processor is configured to implement the method according to any one of claims 1 to 14, the method according to any one of claims 15 to 19, or the method according to claim 20 or 22 by using a logic circuit or by executing code instructions.

25. A computer program product, comprising a computer program, wherein when the computer program is executed by a communication apparatus, the method according to any one of claims 1 to 22 is implemented.

26. A computer-readable storage medium, wherein the storage medium stores a computer program or instructions; and when the computer program or the instructions are executed by a communication apparatus, the method according to any one of claims 1 to 22 is implemented.

27. A communication system, comprising a core network control plane network element and a bearer network control plane network element configured to perform the method according to any one of claims 20 to 22, wherein
the core network control plane network element is configured to: receive topology information of a satellite network from the bearer network control plane network element, wherein the topology information comprises channel information between satellites in the satellite network; determine, based on the topology information and characteristic information of a data flow, a path identifier of the data flow and identification information of satellites through which the data flow passes, wherein the path identifier indicates a path of the data flow, and the path comprises the satellites through which the data flow passes; and send, to the bearer network control plane network element, the path identifier of the data flow and the identification information of the satellites through which the data flow passes.
